# EUROPÄISCHE PATENTSCHRIFT

(11) **EP 0 818 591 B1**
(45) Veröffentlichungstag und Bekanntmachung des Hinweises auf die Patenterteilung: **19.05.2004**
(21) Anmeldenummer: 97110084.7
(22) Anmeldetag: 20.06.1997
(51) Int. Cl.: E04B 2/76, F16B 7/04, A47B 57/56, A47B 96/14

(54) **Montageelement**
Mounting member
Elément de montage

(30) Priorität: 09.07.1996 DE 29611887 U
(43) Veröffentlichungstag der Anmeldung: 14.01.1998
(73) Patentinhaber: Bauer Profiltechnik GmbH, 74382 Neckarwestheim (DE)
(72) Erfinder: Bauer, Wolfgang, 74388 Talheim (DE)
(74) Vertreter: Clemens, Gerhard, Dr.-Ing.

(56) Entgegenhaltungen:
- EP-A- 0 469 284
- DE-U- 9 313 596
- GB-A- 2 031 715

## Beschreibung

### TECHNISCHES GEBIET

Die vorliegende Erfindung betrifft eine Verbindungseinrichtung bestehend aus Profilstäben, die zumindest eine Nut mit Hinterschnitt zum Anschließen weiterer Profilstäbe oder Montageelemente besitzen, und aus einem Montageelement mit zumindest einer Fügefläche und einer Zentriereinrichtung, die als eine aus der Fügefläche herausragende Vorsprungseinheit ausgebildet ist.

### STAND DER TECHNIK

Bei Modul-Montageelementen, wie zum Beispiel Profilschienen, Profilwinkel und so weiter, ist es üblich, um Zentrierungen nur wahlweise zu nutzen, das Montageelement und das zu fügende Bauteil mit jeweils einer Nut zu versehen, in die zur Zentrierung der beiden Bauteile mindestens ein Nutenstein eingesetzt wird. Damit ist ein zusätzlicher Fertigungsaufwand zur Herstellung der Nutensteine und ein Montageaufwand beim Einsetzen der Nutensteine erforderlich.

In der EP-A-183 395 ist ein Montageelement beschrieben, das zur Zentrierung an einer Fügefläche ein Zentriermittel hat, welches als ein aus der Fügefläche herausragender Vorsprung ausgebildet ist. Dieses Montageelement ist jedoch nicht für den Einsatz an Profilstäben geeignet.

In der EP-A-469 284 ist ein Montageelement mit mindestens einem an mindestens einer Fügefläche vorgesehenen Zentriermittel, welches als ein aus der Fügefläche herausragender Vorsprung ausgebildet ist, beschrieben, das sich dadurch auszeichnet, dass der Vorsprung eine Sollbruchstelle hat, die in oder unterhalb der Ebene der Fügefläche liegt. Damit kann das Zentriermittel wahlweise entfernt werden, falls es für bestimmte Einsatzzwecke störend wirkt. Die Herstellung eines derartigen Zentriermittels gestaltet sich relativ aufwendig.

### DARSTELLUNG DER ERFINDUNG

Der vorliegenden Erfindung liegt, ausgehend von dem genannten Stand der Technik, das technische Problem beziehungsweise die Aufgabe zugrunde, eine Verbindungseinrichtung anzugeben, die eine problemlose und einfache Zentrierung an Profilstäben erlaubt, wobei die Herstellung eines Montageelements strengen Wirtschaftlichkeitsanforderungen genügen soll. Die Zentrierung soll dabei in einfacher und zuverlässiger Art und Weise erfolgen.

Die erfindungsgemäße Verbindungseinrichtung ist demgemäß durch die Merkmale des unabhängigen Anspruchs 1 gegeben. Vorteilhafte Ausgestaltungen und Weiterbildungen sind Gegenstand der abhängigen Ansprüche.

Die erfindungsgemäße Verbindungseinrichtung der eingangs genannten Art zeichnet sich demgemäß dadurch aus, dass die Profilstäbe auf ihren mit dem Montageelement in Verbindung zu bringenden Außenoberflächen auf beiden Seiten parallel zur Profilstablängsachse verlaufend jeweils zumindest eine Ziernut mit nach außen offenem Querschnitt besitzen und die Vorsprungseinheit einen Querschnitt besitzt, der mit der zumimdest einen Ziernut der Profilstäbe in Eingriff bringbar ist und das Montageelement in diesem Zustand zentriert an dem jeweiligen Profilstab vorhanden ist.

Hierbei wird erfindungsgemäß die bei den bekannten Profilstäben vorhandene Ziernut zu Arretierungszwecken ausgenützt. Dies kann in einfacher Art und Weise dadurch geschehen, dass die Vorsprungseinheiten erfindungsgemäß einen Querschnitt besitzen, der mit der Ziernut in Eingriff bringbar ist.

Gemäß einer besonders bevorzugten Ausgestaltung der erfindungsgemäßen Verbindungseinrichtung ist die Vorsprungseinheit als Noppeneinheit, insbesondere Quadereinheit ausgebildet, was eine vereinfachte und wirtschaftliche Herstellung ermöglicht.

In einer bevorzugten Ausführungsvariante, die eine einfache und problemlose Zentrierung auch bei um 90° (Grad) versetzter Anordnung des Bauelements an dem Profilstab ermöglicht, zeichnet sich dadurch aus, dass zwei Vorsprungseinheiten vorhanden sind, die im gleichen Abstand zur Profilstablängsachse wie die Ziernute des Profilstabes an der Fügefläche angeordnet sind. Dabei können gemäß einer weiteren Ausgestaltung die Vorsprungseinheiten diagonal versetzt zueinander im Bezug zur Profilstablängsachse angeordnet sein.

Eine besonders bevorzugte Ausgestaltung, die einen zuverlässigen Zentriervorgang ermöglicht und insbesondere für Profilstäbe mit zwei beabstandet zueinander angeordneten Ziernuten geeignet ist, zeichnet sich dadurch aus, dass die Vorsprungseinheiten in den Eckpunkten eines gedachten Quadrats an der Fügefläche angeordnet sind, wobei die Seitenlänge des gedachten Quadrats dem Abstand der Ziernute des Profilstabes entspricht.Dadurch kann das Montageelement wahlweise in um 90° gedrehten Positionen an dem Profilstab zentriert werden.

In einer alternativen Ausgestaltung kann die Vorsprungseinheit zumindest bereichsweise als linienförmige Einheit, das heißt als sich zumindest teilweise in Profilstablängsrichtung erstreckende Vorsprungseinheit ausgebildet sein.

Eine besonders einfache Herstellung läßt sich dadurch umsetzen, dass die Vorsprungseinheit ein Rechteckprofil aufweist, wobei dabei die Erkenntnis umgesetzt wird, dass die Ziernute bekannter Profilstäbe im Wesentlichen ein Rechteckprofil besitzen

Ein erfindungsgemäßes Montageelement zur Verwendung im Rahmen einer Verbindungseinrichtung nach den Merkmalen eines oder meheren der Ansprüche 1 bis 9 mit zumindest einer Fügefläche und einer Zentriereinrichtung, die als eine aus der Fügefläche herausragende Vorsprungseinheit ausgebildet ist, zeichnet sich dadurch aus, parallel beabstandet zur Längsachse der Fügefläche die zumindest eine Vorsprungeinheit angeordnet ist und die Vorsprungseinheit einen Querschnitt besitzt, der mit einer Ziernut eines Profilstabs in Eingriff bringbar ist, die entsprechend parallel beabstandet zur Längsachse eines Profilstabes vorhanden ist, und das Montageelement in diesem Zustand zentriert an dem jeweiligen Profilstab vorhanden ist. Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Detail-Perspektive eines Profilstabes mit einem Montageelement mit Vorsprungseinheiten, Wobei das Montageelement zusätzlich in gedrehter Stellung dargestellt ist,
- Fig. 2: schematische Detail-Seitenansicht eines Montageelements gemäß Fig. 1,
- Fig. 3: schematisches Detail des Eingriffs einer Vorsprungseinheit eines Montageelements in die Ziernut eines Profilstabes,
- Fig. 4: schematische Detail-Seitenansicht eines Montageelements mit zwei beabstandet zueinander angeordneten Vorsprungseinheiten mit spitzer Querschnittsausbildung und
- Fig. 5: schematischer Detailschnitt der Vorsprungseinheit gemäß Fig. 4 mit dargestellter Ziernut.

### WEGE ZUM AUSFÜHREN DER ERFINDUNG

Ein umfangsmäßig im wesentlichen quadratisch ausgebildeter Profilstab 20 besitzt auf allen vier Seiten eine Nut 22 mit Hinterschneidung. Die Nut 22 verläuft parallel zur Längsachse 26 des Profilstabs 20. Zum Anschluß von weiteren Profilstäben oder Montageelementen wird ein Nutenstein in die Nut 22 eingeführt und anschließend mit dem jeweiligen Bauteil verschraubt.

In der Außenoberfläche des Profilstabes 20 zwischen der Nut 22 und der Außenkante ist jeweils parallel zur Nut 22 verlaufend eine Ziernut 24 vorhanden. Pro Seite sind somit zwei beabstandet zueinander angeordnete Ziernuten 24 vorhanden.

Die Nuttiefe der Ziernut 24 ist wesentlich geringer als die Nuttiefe der Nut 22 und beträgt ca. 1 mm (Millimeter). Der Querschnitt ist im wesentlichen rechteckförmig ausgebildet.

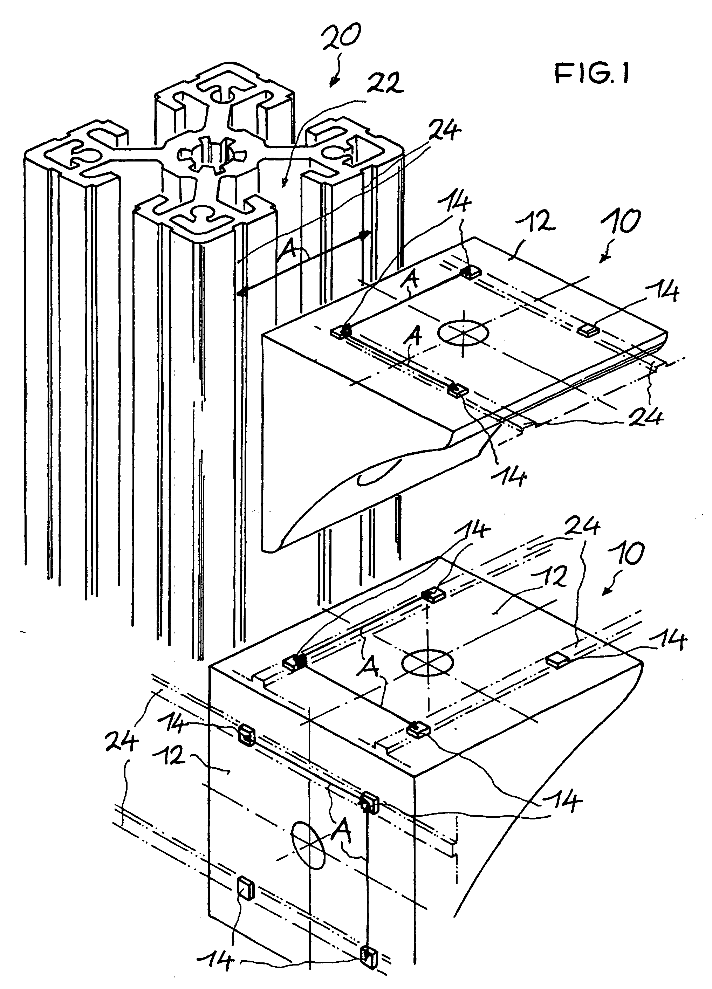

Das in Fig. 1 dargestellte Montageelement 10 ist als Profilwinkel mit zwei Fügeflächen 12 ausgebildet. An jeder Fügefläche 12 sind insgesamt vier quaderförmig ausgebildete Vorsprungseinheiten 14 vorhanden, die in den Ecken eines gedachten Quadrates angeordnet sind. Die Seitenlänge A des gedachten Quadrates entspricht dabei dem Abstand der Ziernut 24 einer Außenseite des Profilstabs 20.

Die Vorsprungseinheit 14 selbst ist in ihrem Querschnitt so bemessen, daß sie problemlos in die Ziernut 24 eingeführt werden kann. Durch die aus der Fügefläche 12 vorstehenden Vorsprungseinheiten 14 ist es in einfacher Art und Weise möglich, das Montageelement 10 an dem Profilstab 20 zu zentrieren. Aufgrund der quadratischen Anordnung der Vorsprungseinheiten kann das Montageelement auch in einer um 90° gedrehten Position problemlos zentriert werden.In Fig. 1 sind bei dem Montageelement 10 die möglichen Verläufe der Ziernuten 24, in die die Vorsprungseinheiten 14 eingesetzt werden können, strichpunktiert schematisch dargestellt.

In einer nicht dargestellten Ausführungsvariante ist die Vorsprungseinheit jeweils als durchgehende Rechteckprofillinie ausgebildet. Der Abstand beider Vorsprungseinheiten entspricht dem Abstand A der Ziernuten 24. Dabei können die Vorsprungseinheiten der anschließenden weiteren Fügefläche 12 praktisch um 90° gedreht sein.

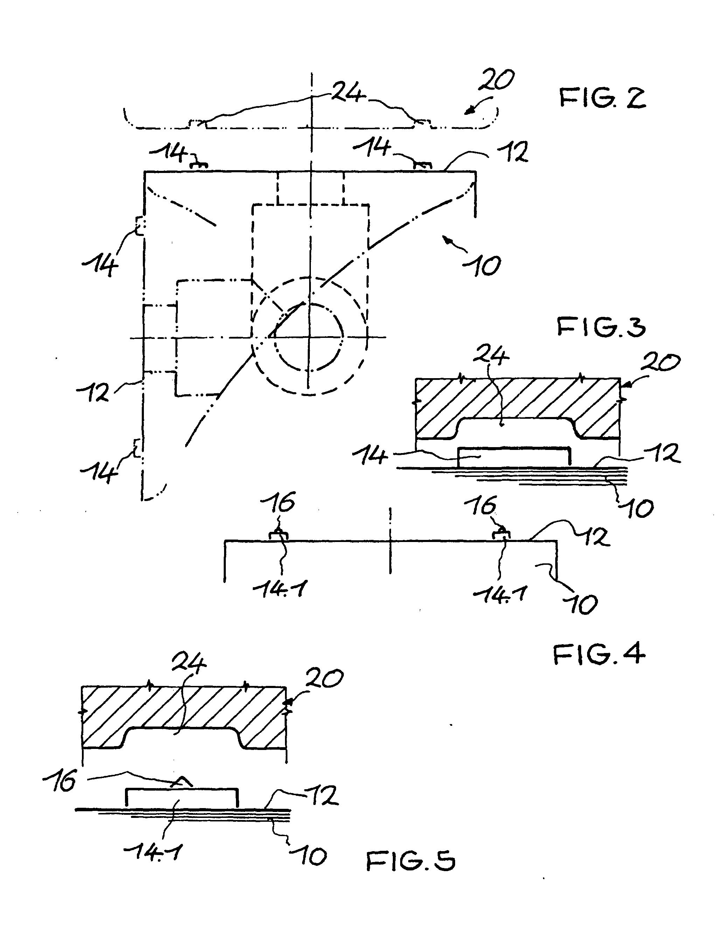

In den Figuren 4 und 5 ist schematisch eine weitere Vorsprungseinheit 14.1 dargestellt, die sich von der Vorsprungseinheit 14 dadurch unterscheidet, daß sie zusätzlich eine Arretierspitze 16 aufweist. Diese Arretierspitze 16 verhindert ein unbeabsichtigtes Verrutschen des zentrierten Profilwinkels während dessen Montage.

## Patentansprüche

1. Verbindungseinrichtung bestehend aus Profilstäben (20), die zumindest eine Nut (22) mit Hinterschnitt zum Anschließen weiterer Profilstäbe oder Montageelemente besitzen, und aus einem Montageelement (10) mit
- zumindest einer Fügefläche (12) und
- einer Zentriereinrichtung, die als eine aus der Fügefläche (12) herausragende Vorsprungseinheit (14) ausgebildet ist,
**dadurch gekennzeichnet, dass**
- die Profilstäbe (20) auf ihren mit dem Montageelement (10) in Verbindung zu bringenden Außenoberflächen auf beiden Seiten parallel zur Profilstablängsachse (26) verlaufend jeweils zumindest eine Ziernut (24) mit nach außen offenem Querschnitt besitzen und
- die Vorsprungseinheit (14) einen Querschnitt besitzt, der mit der zumindest einen Ziernut (24) der Profilstäbe (20) in Eingriff bringbar ist und das Montageelement (10) in diesem Zustand zentriert an dem jeweiligen Profilstab (20) vorhanden ist.

2. Verbindungseinrichtung nach Anspruch 1,
**dadurch gekennzeichnet, dass**
- die Vorsprungseinheit (14) als Noppeneinheit, insbesondere Quadereinheit, ausgebildet ist.

3. Verbindungseinrichtung nach Anspruch 2,
**dadurch gekennzeichnet, dass**
- zwei Vorsprungseinheiten (14) vorhanden sind, die im gleichen Abstand zur Profilstablängsachse (26) wie die Ziernut (24) des Profilstabes (20) an der Fügefläche (12) angeordnet sind.

4. Verbindungseinrichtung nach Anspruch 3,
**dadurch gekennzeichnet, dass**
- die Vorsprungseinheiten (14) diagonal versetzt zur Profilstablängsachse (26) angeordnet sind.

5. Verbindungseinrichtung nach Anspruch 2,
**dadurch gekennzeichnet, dass**
- die Vorsprungseinheiten (14) in den Eckpunkten eines gedachten Quadrats an der Fügefläche (12) angeordnet sind, wobei die Seitenlänge des gedachten Quadrats dem Abstand der Ziernute (24) des Profilstabes (20) entspricht.

6. Verbindungseinrichtung nach Anspruch 1,
**dadurch gekennzeichnet, dass**
- die Vorsprungseinheit als zumindest bereichsweise linienförmige Einheit, das heißt als sich in Richtung der Profilstablängsachse (26) erstreckende Einheit, ausgebildet ist.

7. Verbindungseinrichtung nach einem oder mehreren der vorstehenden Ansprüche,
**dadurch gekennzeichnet, dass**
- die Vorsprungseinheit (14) einen Rechteckquerschnitt besitzt.

8. Verbindungseinrichtung nach einem oder mehreren der vorstehenden Ansprüche,
**dadurch gekennzeichnet, dass**
- die Vorsprungseinheit (14.1) zumindest eine Arretierspitze (16) besitzt.

9. Verbindungseinrichtung nach einem oder mehreren der vorstehenden Ansprüche,
**dadurch gekennzeichnet, dass**
- das Element als Druckguß- oder Aluminiumelement ausgebildet ist.

10. Montageelement (10) zur Verwendung im Rahmen einer Verbindungseinrichtung nach einem oder mehreren der vorstehenden Ansprüche mit
- zumindest einer Fügefläche (12) und
- einer Zentriereinrichtung, die als eine aus der Fügefläche (12) herausragende Vorsprungseinheit (14) ausgebildet ist,
**dadurch gekennzeichnet, dass**
- parallel beabstandet zur Längsachse der Fügefläche (12) die Vorspprungseinheit (14) angeordnet ist und
- die Vorsprungseinheit (14) einen Querschnitt besitzt, der mit einer Ziernut (24) eines Profilstabs (20) in Eingriff bringbar ist, die entsprechend parallel beabstandet auf beiden Seiten der Längsachse (26) des Profilstabes (20) vorhanden ist, und das Montageelement (10) in diesem Zustand zentriert an dem jeweiligen Profilstab (20) vorhanden ist.

## Claims

1. Connecting device comprising profile bars (20) which have at least one groove (22) with an undercut for the attachment of further profile bars or mounting elements, and also comprising a mounting element (10), having
- at least one joining surface (12) and
- a centring device, which is designed as a projection unit (14) which protrudes out of the joining surface (12),
**characterized in that**
- on their outer surfaces which are to be brought into contact with the mounting element (10), the profile bars (20) have on both sides, running parallel to the profile-bar longitudinal axis (26), in each case at least one decorative groove (24) with an outwardly open cross section, and
- the projection unit (14) has a cross section which can be brought into engagement with the at least one decorative groove (24) of the profile bars (20), and the mounting element (10), in this state, is present in a centred manner on the respective profile bar (20).

2. Connecting device according to Claim 1,
**characterized in that**
- the projection unit (14) is designed as a protuberance unit, in particular a cuboidal unit.

3. Connecting device according to Claim 2,
**characterized in that**
- two projection units (14) are provided, these being arranged on the joining surface (12) at the same spacing in relation to the profile-bar longitudinal axis (26) as the decorative groove (24) of the profile bar (20).

4. Connecting device according to Claim 3,
**characterized in that**
- the projection units (14) are arranged in a diagonally offset manner in relation to the profile-bar longitudinal axis (26).

5. Connecting device according to Claim 2,
**characterized in that**
- the projection units (14) are arranged at the corner points of an imaginary square on the joining surface (12), the side length of the imaginary square corresponding to the spacing between the decorative grooves (24) of the profile bar (20).

6. Connecting device according to Claim 1,
**characterized in that**
- the projection unit is designed as a linear unit, at least in certain areas, that is to say as a unit which extends in the direction of the profile-bar longitudinal axis (26).

7. Connecting device according to one or more of the preceding claims,
**characterized in that**
- the projection unit (14) has a rectangular cross section.

8. Connecting device according to one or more of the preceding claims,
**characterized in that**
- the projection unit (14.1) has at least one arresting tip (16).

9. Connecting device according to one or more of the preceding claims,
**characterized in that**
- the element is designed as a diecast or aluminium element.

10. Mounting element (10) for use in the context of a connecting device according to one or more of the preceding claims, having
- at least one joining surface (12) and
- a centring device, which is designed as a projection unit (14) which protrudes out of the joining surface (12),
**characterized in that**
- the projection unit (14) is arranged with parallel spacing in relation to the longitudinal axis of the joining surface (12), and
- the projection unit (14) has a cross section which can be brought into engagement with a decorative groove (24) of a profile bar (20), the decorative groove being present with corresponding parallel spacing on both sides of the longitudinal axis (26) of the profile bar (20), and the mounting element (10), in this state, is present in a centred manner on the respective profile bar (20).

## Revendications

1. Dispositif d'assemblage composé de barres profilées (20) qui possèdent au moins une rainure (22) en contre-dépouille pour les assembler avec d'autres barres profilées ou des éléments de montage, et un élément de montage (10) comprenant
- au moins une surface de jonction (12) et
- un dispositif de centrage qui est réalisé en tant qu'unité saillante (14) faisant saillie de la surface de jonction (12),
**caractérisé en ce que** les barres profilées (20) possèdent sur leur surfaces extérieures à relier à l'élément de montage (10) au moins une rainure décorative (24) de section transversale ouverte vers l'extérieur, qui s'étend de part et d'autre de l'axe longitudinal (26) des barres profilées et parallèlement à celui-ci, **en ce que** l'unité saillante (14) présente une section transversale qui peut être mise en prise avec ladite au moins une rainure décorative (24) des barres profilées (20), et **en ce que** l'élément de montage (10) est alors centré sur la barre profilée (20).

2. Dispositif d'assemblage selon la revendication 1, **caractérisé en ce que** l'unité saillante (14) est réalisée en tant qu'unité à picot, notamment à picot cubique.

3. Dispositif d'assemblage selon la revendication 2, **caractérisé en ce que** deux unités saillantes (14) sont prévues, qui sont disposées sur la surface de jonction (12) en présentant chacune la même distance par rapport à l'axe longitudinal (26) de la barre profilée que la rainure décorative (24) de ladite barre profilée (20).

4. Dispositif d'assemblage selon la revendication 3, **caractérisé en ce que** les unités saillantes (14) sont disposées décalées en diagonale par rapport à l'axe longitudinal (26) des barres profilées.

5. Dispositif d'assemblage selon la revendication 2, **caractérisé en ce que** les unités saillantes (14) sont situées sur la surface de jonction (12) dans les coins d'un carré imaginaire, sachant que la longueur des côtés du carré imaginaire correspond à l'écartement des rainures décoratives (24) de la barre profilée (20).

6. Dispositif d'assemblage selon la revendication 1, **caractérisé en ce que** l'unité saillante est réalisée en tant qu'unité au moins en partie linéaire, c'est-à-dire en tant qu'unité s'étendant dans la direction de l'axe longitudinal (26) de la barre profilée.

7. Dispositif d'assemblage selon l'une ou plusieurs des revendications précédentes, **caractérisée en ce que** l'unité saillante (14) possède une section transversale rectangulaire.

8. Dispositif d'assemblage selon l'une ou plusieurs des revendications précédentes, **caractérisée en ce que** l'unité saillante (14.1) possède au moins une pointe d'arrêt (16).

9. Dispositif d'assemblage selon l'une ou plusieurs des revendications précédentes, **caractérisée en ce que** l'élément est conçu en tant qu'élément moulé sous pression ou élément en aluminium.

10. Élément de montage (10) destiné à être mis en oeuvre dans le cadre d'un dispositif d'assemblage selon l'une ou plusieurs des revendications précédentes, comprenant
- au moins une surface de jonction (12) et
- un dispositif de centrage qui est réalisé en tant qu'unité saillante (14) faisant saillie de la surface de jonction (12),
**caractérisé en ce que** l'unité saillante (14) est disposée parallèlement à l'axe longitudinal de la surface de jonction (12) et à distance de celui-ci, **en ce que** l'unité saillante (14) possède une section transversale pouvant être mise en prise avec une rainure décorative (24) d'une barre profilée (20), lesquelles rainures décoratives sont présentes de part et d'autre de l'axe longitudinal (26) de la barre profilée (20), également à distance de celui-ci et parallèlement à celui-ci, et **en ce que** l'élément de montage (10) est alors toujours centré sur la barre profilée (20).
